Europäisches Patentamt

**European Patent Office**     (11) Numéro de publication:     **0 055 153**

Office européen des brevets                                               **B1**

(12)           **FASCICULE DE BREVET EUROPEEN**

(45) Date de publication du fascicule du brevet: **19.06.85**     (51) Int. Cl.⁴: **G 09 G 3/36, G 02 F 1/13**

(21) Numéro de dépôt: **81401864.4**

(22) Date de dépôt: **24.11.81**

(54) Dispositif de commande d'un écran de visualisation et écran de visualisation commandé par ce dispositif.

(30) Priorité: **15.12.80 FR 8026544**

(43) Date de publication de la demande:
**30.06.82 Bulletin 82/26**

(45) Mention de la délivrance du brevet:
**19.06.85 Bulletin 85/25**

(84) Etats contractants désignés:
**DE GB IT NL SE**

(56) Documents cités:
**FR-A-2 245 077**
**FR-A-2 389 955**
**GB-A-2 042 237**
**US-A-3 754 230**
**US-A-4 137 551**

(73) Titulaire: **THOMSON-CSF**
**173, Boulevard Haussmann**
**F-75379 Paris Cedex 08 (FR)**

(72) Inventeur: **Hareng, Michel**
**THOMSON-CSF SCPI 173, bld Haussmann**
**F-75360 Paris Cedex 08 (FR)**
Inventeur: **Hehlen, Robert**
**THOMSON-CSF SCPI 173, bld Haussmann**
**F-75360 Paris Cedex 08 (FR)**
Inventeur: **Le Berre, Serge**
**THOMSON-CSF SCPI 173, bld Haussmann**
**F-75360 Paris Cedex 08 (FR)**
Inventeur: **Leclerc, Pierre**
**THOMSON-CSF SCPI 173, bld Haussmann**
**F-75360 Paris Cedex 08 (FR)**
Inventeur: **Marcenac, Philippe**
**THOMSON-CSF SCPI 173 bld Haussmann**
**F-75360 Paris Cedex 08 (FR)**
Inventeur: **Perbet, Jean-Noel**
**THOMSON-CSF SCPI 173, bld Haussmann**
**F-75360 Paris Cedex 08 (FR)**

(74) Mandataire: **Taboureau, James et al**
**THOMSON-CSF SCPI 173, Bld Haussmann**
**F-75379 Paris Cedex 08 (FR)**

Courier Press, Leamington Spa, England.

### Description

La présente invention concerne les dispositifs de visualisation d'images transmises sous la forme d'un signal électrique communément appelé signal vidéo. Parmi les différents dispositifs de visualisation possibles, l'invention s'applique plus particulièrement aux écrans de visualisation à cristaux liquides, à haute définition, du type matriciel. Elle concerne le circuit de balayage de la matrice, organisé de façon à obtenir une haute définition au moyen d'un nombre plus faible de dispositifs de commande du balayage.

L'invention s'applique en particulier aux écrans de visualisation comportant des cristaux liquides en phase smectique, lesquels sont commandés en courant.

On sait que lorsque l'on refroidit une couche mince d'un matériau présentant une phase smectique en partant de la phase liquide, l'aspect optique de la couche mince dépend fortement de la vitesse de refroidissement. Si le refroidissement s'opère lentement, le matériau s'oriente uniformément et la couche apparait comme parfaitement transparente. Si par contre, la transition de la phase liquide à la phase smectique s'effectue très rapidement, il se forme dans la couche des domaines présentant les uns par rapport aux autres des orientations différentes et entrainant une forte diffusion de la lumière transmise ou réfléchie.

Il est connu d'utiliser cet effet pour enregistrer une image sur un film de cristal liquide présentant une phase smectique. Le matériau, placé entre deux lames transparentes, est maintenu à une température telle qu'il soit dans sa phase smectique, l'inscription d'un point image s'obtient par un échauffement de la couche liquide suivi d'un refroidissement rapide.

Il est connu d'apporter la quantité de chaleur nécessaire à la fusion de la couche de cristaux liquides par un rayonnement infra-rouge ou par un rayonnement laser.

La société demanderesse à déposé le 5 Mai 1977 une demande de brevet enregistrée sous le N° 77.13 738, selon laquelle il devient possible d'augmenter la vitesse d'inscription de l'image dans une couche de matériau présentant un tel effect thermo-électrique en utilisant des organes qui sont des résistances chauffantes permettant d'inscrire une image ligne par ligne, ce qui autorise lors à disposer de la durée d'une ligne pour inscrire simultanément tous les points de cette ligne. Ce procédé d'inscription et d'effacement est plus rapide que les procédés optiques et permet de se rapprocher de l'inscription sur uné cran de visualisation d'images vidéo.

Cependant, la mise en oeuvre d'écrans de visualisation à haute définition, selon ce procédé, se heurte en fait à un problème lié au nombre de lignes et de colonnes de la matrice de points qui définissent l'image, ce nombre élevé correspondant à un nombre élevé de dispositifs électroniques de commande pour le balayage ligne à ligne.

Dans la suite du texte, on conviendra d'appeler électronique de commande l'ensemble des dispositifs qui permettent de faire passer le courant dans une ligne de la matrice de l'écran, ce dispositif comportant notamment un ou deux transistors de puissance, les transistors qui commandent leurs bases, ainsi que les systèmes d'horloge, registres à décalage et autres séquenceurs.

Les divers écrans de visualisation et panneaux d'affichage matriciel connus, qu'ils soient à diodes électroluminescentes, à cristaux liquides, à plasma ou électrolithiques, se heurtent en fait à la réalisation de l'électronique de commande externe et surtout à son prix. En effet, un écran de visualisation à haute définition, c'est à dire par exemple 512 ou 1024 lignes ou colonnes, ce qui correspond sensiblement à la définition l'une image de télévision, selon les normes, suppose donc l'association de 512 ou 1024 connexions vers 512 ou 1024 électroniques de commande externes, ce qui est très coûteux dans la pratique. Un tel câblage, par fils ou par connecteurs plats appelés limandes, selon l'art connu, est réalisable en laboratoire, mais ne constitue pas une solution industrielle. D'autant plus que du fait de la difficulté technique, le prix de l'électronique de commande fait le prix d'un écran de visualisation, d'avantage que l'écran à proprement parler.

Le dispositif selon l'invention permet de conserver une haute définition pour l'écran de visualisation et d'abaisser considérablement le nombre de dispositifs électroniques de commande externes, par une combinaison du type multiplexage. Dans ces conditions, outre l'abaissement du prix de revient, l'association à un écran de cristaux liquides smectiques d'un faible nombre de connexions d'entrées et de sorties associé à un faible nombre d'électroniques de commande, permet d'intégrer sur un même substrat du type circuit hybride de grandes dimensions, sur plaque de verre ou tôle émaillée, l'ensemble de l'écran de visualisation comprenant le panneau d'affichage, l'électronique de commande des colonnes (signal vidéo), l'électronique de commande des lignes (chauffage des cristaux), l'accès à l'écran de visualisation qui ne comporte plus qu'un faible nombre de connexions, assuré par un connecteur embrochable.

Le brevet US—A—3 754 230 décrit un réseau de visualisation à plasma, ou à matrices de diodes électroluminescentes ou à matériau dont la réflectivité de surface est contrôlée. Cet écrant est organisé pour travailler en tension, et les lignes n'y sont pas inscrites au moyen d'un courant, mais par effet capacitif, par l'intermédiaire de grilles couplées de façon capacitive aux lignes de l'écran. Dans cet écran à plasma ou à diodes, les N lignes sont réunies en $\sqrt{N}$ groups de $\sqrt{N}$ lignes chacun, par l'une de leurs extrêmités, mais ne sont pas multiplexées par leur autre extrêmité, en d'autres $\sqrt{N}$ groupes. Ce sont les moyens de commande des lignes qui sont multiplexés en $2\sqrt{N}$ moyens pour N lignes: les moyens de commande sont tous regroupés, par rapport aux lignes qui sont en dérivation entre eux.

Dans l'écran de visualisation à cristaux liquides smectiques donc commandés en courant, de la présente invention, si la définition de l'écran correspond à N lignes, ces N lignes sont organisées en $\sqrt{N}$ groupes comportant chacun $\sqrt{N}$ résistances, commandées par l'une de leurs extrémités, que l'on appellera une voie d'accès, par $\sqrt{N}$ électroniques de commande, dont chacune est réunie à l'un des groupes de résistances, et commandées à l'autre extrémité par un autre groupe $\sqrt{N}$ électroniques de commande dont chacune est réunie à une seule résistance de chacun des groupes.

De façon plus précise, l'invention consiste en un dispositif de commande d'un écran de visualisation reproduisant des images analysées sous la forme d'une trame de lignes et de colonnes, cet écran comprenant une couche d'un matériau inscriptible par un effet mixte thermique et électrique, en contact avec des lignes de trame, constituées de lignes chauffantes déposées sur un substrat, ce dispositif de commande étant caractérisé en ce que le matériau inscriptible est du type cristaux liquides en phase smectique et que:

— les colonnes sont inscrites par un signal vidéo en tension,
— les lignes, inscrites séquentiellement au moyen d'un courant, sont comprises, chacune, entre deux dispositifs électroniques de commande répartis en deux groupes de $\sqrt{N}$ dispositifs pour N lignes, ces groupes étant disposés en, d'une part, $\sqrt{N}$ dispositifs reliés à une extrémité de $\sqrt{N}$ groupes de lignes connectées en parallèle, et, d'autre part, $\sqrt{N}$ dispositifs dont chacun est relié à l'autre extrémité d'une seule ligne de chacun des $\sqrt{N}$ groupes de lignes
— et en ce que chaque ligne est constituée par une résistance chauffante en série avec un élément non linéaire en I/V.

L'invention sera mieux comprise par la description d'un exemple d'application, cette description s'appuyant sur les figures annexées qui représentent:

— figure 1: le schéma simplifié d'un panneau d'affichage matriciel selon l'art connu;
— figure 2: le schéma de fonctionnement d'un écran de visualisation à cristaux smectiques;
— figure 3: le schéma électrique de la commande des lignes d'un écran de visualisation selon l'invention;
— figure 4: un premier montage de diodes, pour chaque ligne;
— figure 5: un second montage de diodes, pour chaque ligne;
— figure 6: le schéma d'implantation du circuit des lignes sur le substrat;
— figure 7: une vue en coupe, simplifiée, d'un écran de visualisation selon l'invention;
— figure 8: le schéma d'implantation, simplifié, d'un écran de visualisation selon l'invention.

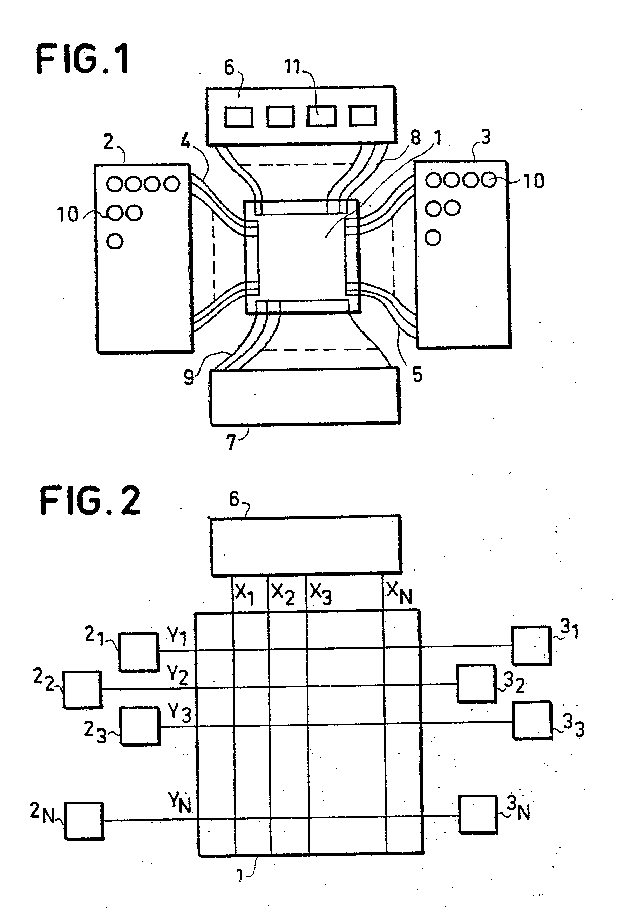

La figure 1 représente le schéma simplifié d'un panneau d'affichage matriciel selon l'art connu.

Un écran de visualisation matriciel 1 est composé soit de diodes électroluminescentes, soit de cristaux liquides, soit d'un plasma: l'invention sera décrite en s'appuyant sur le cas présent d'un écran à cristaux liquides smectiques, c'est à dire que leur inscription et leur effacement supposent un chauffage des points de l'écran. Ce panneau d'affichage 1 est commandé, selon les lignes horizontales, par un ensemble d'électronique de commande, c'est à dire un panneau 2 à une extrémité des lignes et un panneau 3 à l'autre extrémité des lignes. L'électronique de commande pourrait aussi bien ne comporter qu'un seul panneau à une extrémité des lignes, l'autre extrémité étant reliée au point commun du circuit. Quoiqu'il en soit, entre l'électronique de commande et le point commun du circuit sont nécessaires deux circuits, généralement gravés dans une couche métallique déposée sur un support souple, ces deux circuits constituant les connexions 4 et 5 entre les lignes du panneau d'affichage et les circuits d'électronique de commande. De la même façon les colonnes verticales du panneau d'affichage sont commandées à partir de deux circuits 6 et 7 d'électronique de commande réunis électriquement au panneau d'affichage par des circuits souples ou limandes 8 et 9.

L'électronique de commande des lignes est représentée schématiquement et symboliquement sur les panneaux 2 et 3 par un certain nombre de transistors de puissance 10: si la définition du panneau de visualisation à haute définition est par exemple de 1024 lignes il y a donc au moins 1024 transistors de puissance 10. En ce qui concerne les colonnes verticales, l'inscription se fait à partir d'un signal électrique délivré par l'électronique de commande du panneau 6 sur laquelle ont été représentés symboliquement un certain nombre de circuits intégrés 11.

L'inscription des différents points d'une même ligne se fait simultanément lorsque cette ligne a été chauffée par l'intermédiaire d'un transistor de puissance 10.

L'invention concerne la commande des lignes, qui sont chauffées séquentiellement, tous les points d'une même ligne étant inscrits simultanément, par exemple, par un signal vidéo qui, lui, n'est pas modifié par l'invention.

La figure 2 permet de rappeler le fonctionnement d'un écran de visualisation à cristaux smectiques: elle constitue un agrandissement de la partie central de la figure 1.

L'écran de visualisation 1 est constitué par une fine pellicule de cristaux liquides enfermés entre un ubstrat solide qui sert de fond de boitier et une plaque transparente qui fait fonction de couvercle du boitier, cette plaque transparente permettant l'accès à la visualisation. Sur le substrat sont gravées par exemple les lignes horizontales d'ordonnées $Y_1$ $Y_2$ $Y_3$ ... $Y_N$, sous forme de métallisations déposées sur le substrat, ces métallisations présentent une résistance de l'ordre de 50 Ohms. Sur la plaque transparente sont déposées d'autres métallisations, semi-transparentes, qui constituent les colonnes verticales d'abscicces $X_1$ $X_2$ $X_3$ ... $X_N$. Les lignes horizontales sont chauffées de façon à amener le cristal liquide smectique à l'état liquide, chaque ligne chauffée séquentiellement par une puissance de l'ordre de 20 Watts crête qui passe à travers l'électronique de commande $2_1$ associé à $3_1$ pour la ligne $Y_1$, $2_2$ associé à $3_2$ pour la ligne $Y_2$, ... etc.

Lorsqu'une ligne de cristal smectique a été chauffée, les différents points qui la constituent sont inscrits dans les colonnes $X_1$ $X_2$ $X_3$ ... $X_N$ à partir de l'électronique de commande 6 du signal vidéo. Selon la tension qui est appliquée ou qui n'est pas appliquée en un point de croisement entre la ligne considérée et les colonnes, le cristal smectique est orienté ou n'est pas orienté au cours de son refroidissement et présentera un aspect transparent ou diffusant. Ce fonctionnement fait partie de l'art connu: il a été rappelé pour montrer l'importance que présente l'électronique de commande des lignes lorsqu'il s'agit d'un écran à haute définition tel que par exemple compris entre 600 et 1000 lignes. Le nombre de dispositifs de commande du passage du courant dans les lignes est à ce moment là au moins égal au nombre de lignes, si l'ensemble des dispositifs de commande 3 est constitué par une mise à la masse commune.

En outre, il faut considérer que d'un point de vue matériel, et outre le prix de toute l'électronique de commande, les liaisons et les connexions deviennent difficilement réalisables si pour un écran de définition 1000×1000 il faut câbler sur les côtés de l'écran 2000 connexions externes. La connectique existante, telle que par exemple les connecteurs enfichables pour cartes de circuits imprimés, n'est pas applicable à un tel écran. De plus, sur un aussi grand nombre de soudures réalisé, le risque que une ou plusieurs soudures soit défectueuse n'est pas négligeable.

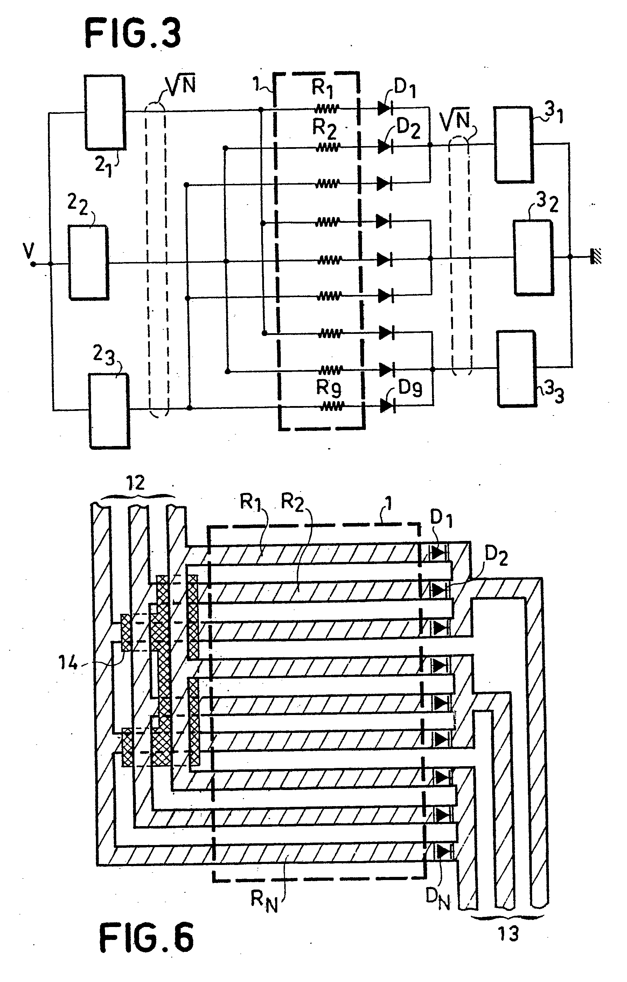

Les écrans de visualisation selon l'invention, par exemple à cristaux smectiques permettent une simplification de la commande de façon à en rendre la réalisation plus aisée, plus fiable et moins coûteuse. C'est l'un des buts de l'invention dont un aspect est représenté en figure 3.

Sur la figure 3 sont représentées schématiquement neuf résistances de ligne $R_1$ à $R_9$, commandées en courant, entre la masse et une source V, à travers des électroniques de commande 2 et 3. Cette simplification en nombre n'a pour but que l'alléger le dessin qui devrait pour une définition de 1000 lignes de l'écran de visualisation comporter 1000 résistances et les électroniques de commande associées. De façon plus générale,

pour une définition de N lignes, c'est un nombre au moins égal à N électroniques de commande, qu'il faudrait représenter.

Les électroniques de commande, comme cela a été dit, ne sont pas simplement un transistor de puissance, mais représentent tout un ensemble plus complexe de transistors de puissance associés à un circuit programmé séquentiel comportant en outre le moyen d'action sur la base de chacun des transistors de puissance, les registres à décalage, l'horloge ... .etc.

C'est donc en vue de diminuer le nombre des ensembles de commande que les lignes sont regroupées et alimentées de façon séquentielle par les ensembles de commande qui, combinés deux à deux, laissent passer le courant dans une ligne et une ligne seulement. Selon cette réalisation, les N résistances chauffantes de lignes de l'écran 1 sont regroupées en $\sqrt{N}$ groupes comportant chacun $\sqrt{N}$ résistances. Chacun des groupes est réuni à l'une de ses extrémités à une électronique de commande 3, ce qui nécessite donc $\sqrt{N}$ électroniques de commande pour $\sqrt{N}$ groupes de résistances.

Par ailleurs, le passage du courant à travers les lignes est commandé, à l'autre extrémité des lignes, par $\sqrt{N}$ électroniques de commande 2, chaque dispositif 2 étant réuni à une seule ligne de chacun des $\sqrt{N}$ groupes de lignes.

Par conséquent, chaque ligne est commandée de façon unitaire par une organisation séquentielle telle qu'une électronique de commande 2 associée à une électronique de commande 3 ne laisse passer le courant qu'à travers une seule et unique ligne. Ainsi, N lignes sont commandées par $2\sqrt{N}$ dispositifs d'électroniques de commande.

Cette simplification de la réalisation d'un écran prend en fait toute son importance pour les écrans à haute définition. Ainsi, si au lieu de se limiter à 9 lignes commandées par 6 dispositifs, en considère le cas d'un écran à 1024 lignes, il n'est plus nécessaire que le disposer pour 1024 résistances de lignes, de 2 fois 32, c'est à dire 2 fois $\sqrt{1024}$ dispositifs de commandes.

Dans ces conditions, l'implantation à proximité de l'écran de visualisation, ou sur le support même de l'écran de visualisation de 2 séries de 32 transistors de puissance chacune devient réalisable avec une probabilité de fiabilité élevée.

Sur la figure 3, chaque ligne comporte en outre un certain nombre de diodes à raison d'une diode par résistance de lignes chauffantes. Le rôle de ces diodes est d'empêcher l'inscription simultanée d'une pluralité de points sur une même colonne.

Ces diodes peuvent se trouver, pour chaque ligne, soit entre la source de courant et la résistance chauffante, soit entre la résistance chauffante et le point commun du circuit.

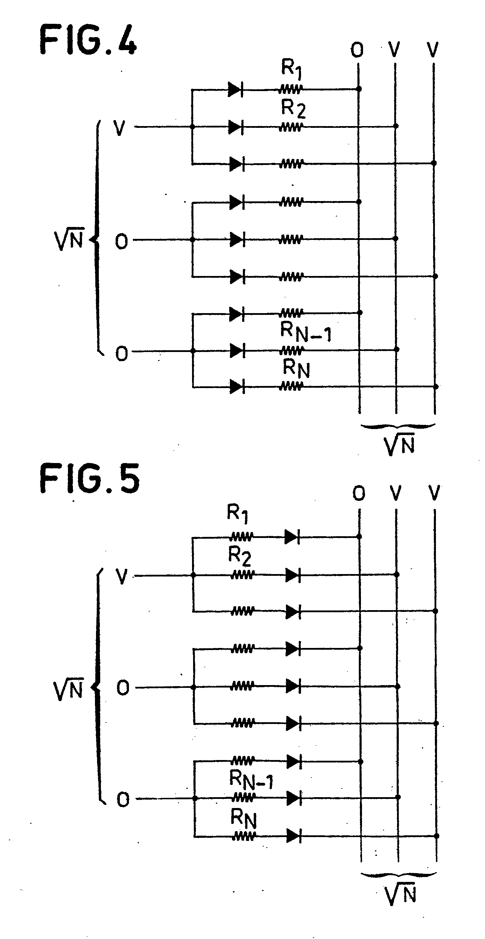

Les figures 4 et 5 expliquent et justifient le choix d'une position des diodes, plutôt que l'autre.

Le bon fonctionnement d'une matrice à cristal liquide smectique nécessite:

— d'appliquer des impulsions de chauffage d'une valeur crête inférieure à la tension d'effacement total;

— d'appliquer un potentiel nul à la ligne adressée au cours du refroidissement, le champ électrique du signal vidéo étant appliqué entre cette ligne et les électrodes de colonnes.

Le potentiel moyen appliqué pendant la durée T d'une image dépend de la position relative des diodes et des résistances chauffantes.

Sur la figure 4, sont représentées les lignes d'un écran, composées de diodes $D_1$ à $D_N$ et de résistances $R_1$ à $R_N$, les diodes étant réunies aux résistances par leur cathode, tandis que sur la figure 5, comparable, les diodes sont réunies aux résistances par leur anode. Si N est le nombre de lignes, pendant le temps T/N, on a:

— dans le cas de la figure 4: $\sqrt{-1}$ résistances à 0 et les autres résistances à+V, c'est à dire sous tension;

— dans le cas de la figure 5: $\sqrt{N-1}$ résistances à+V et les autres résistances à zéro.

Ainsi, pendant le temps T d'une image, une résistance donnée est sous tension V pendant

$$(\sqrt{N-1})\frac{T}{\sqrt{N}}$$

et sous tension nulle pendant

$$\frac{T}{\sqrt{N}}$$

dans le cas de la figure 4. Dans le cas de la figure 5, la tension V n'est appliquée que pendant le temps

$$\frac{T}{\sqrt{N}}.$$

ce qui est préférable du point de vue du fonctionnement pour les cristaux liquides, en durée de vie par exemple.

La réalisation de ces diodes, ou d'une façon plus générale d'éléments non linéaires en I/V, dépend essentiellement des substrats utilisés pour l'écran de visualisation.

Avec les substrats de type silicium monocristallin, utilisés dans les écrans comportant des points élémentaires de petites dimensions, c'est à dire de 20 à 100 microns, les diodes classiques peuvent être intégrées directement dans le substrat semiconducteur ou rapportées selon une technologie de circuit hybride.

Avec des substrats tels que le verre, utilisés dans les écrans à vision directe, de plus grandes dimensions, et comportant deux à dix points par millimètre, les diodes sont hybridées comme précédemment ou réalisées au moyen de silicium amorphe.

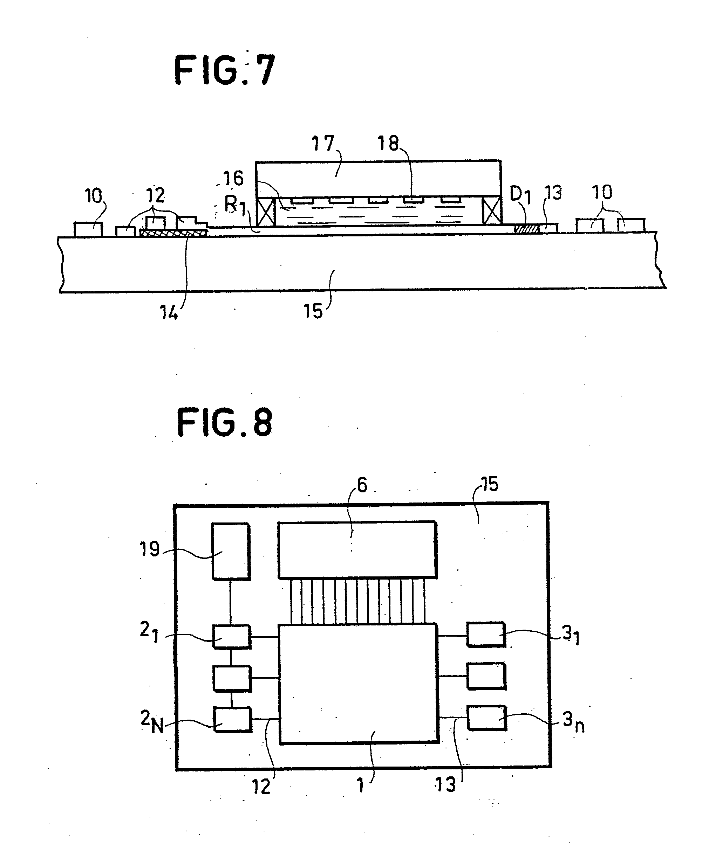

La figure 6 représente le schéma d'implantation du circuit des résistances de lignes sur le substrat, selon l'invention. Sur un substrat tel que le verre, sont réalisées N résistances chauffantes $R_1$ à $R_N$, correspondant aux lignes de l'écran, à l'intérieur du cadre 1 qui définit les dimensions de l'écran de visualisation. Ces lignes de résistances chauffantes sont obtenues à titre d'exemple par gravure d'une couche d'aluminium déposée sous vide, et ont une résistance voisine de 50 Ohms.

Les lignes de résistances sont prolongées à leurs extrémités par des dépôts métalliques tels que 12 et 13, à raison de $\sqrt{N}$ liaisons métalliques 12 à une extrémité des lignes de résistances et $\sqrt{N}$ liaisons métalliques 13 à l'autre extrémité des lignes de résistances. Du côté où les liaisons métalliques se chevauchent pour multiplexer les résistances réunies de différents groupes à une même liaison métallique, des épaisseurs d'isolant 14 permettent le chevauchement des $\sqrt{N}$ liaisons métalliques.

Les diodes $D_1$ à $D_N$ sont implantées par hybridation par exemple, de préférence entre les résistances chauffantes et le point commun. Les lignes non adressées voient donc un courant nul, ou le courant inverse de ces diodes. Les performances des diodes dépendent donc de la puissance minimale admissible dans ces lignes.

La figure 7 représente une vue en coupe simplifiée d'un écran de visualisation selon l'invention.

Sur un substrat 15 est réalisé un écran de visualisation composé d'une pellicule de cristaux liquides smectiques 16 maintenus au moyen d'une plaque transparente 17. La cavité à l'intérieur de laquelle est maintenue la pellicule de cristaux liquides est fermée par des moyens appropriés tels que des cales d'épaisseur. L'inscription se fait entre des lignes de résistances chauffantes, dont seule la première résistance $R_1$ est représentée sur cette coupe, et des colonnes de métallisations semi-transparentes 18 déposées sur le couvercle transparent 17.

La structure plane du dispositif de visualisation permet, comme cela a été décrit, de réaliser sur le substrat d'une part les métallisations d'accès des lignes en 12 et en 13 et d'autre part les diodes dont seule la diode $D_1$ correspondant à la ligne $R_1$ est visible.

L'objet de la présente invention étant de commander un écran de visualisation à haute définition, c'est à dire à grand nombre de lignes et de colonnes, au moyen d'un faible nombre de dispositifs électroniques de commande séquentielle des lignes, le nombre restreint des connexions d'accès à l'écran matriciel permet de rapporter cette électronique de commande à côté de l'écran à proprement parler, sur le substrat 15.

Sur la figure 7 ont été représentés quelques uns des transistors de puissance 10 qui font partie de l'électronique de commande des lignes. Ces transistors, comme cela a été dit, ne constituent pas à eux seuls l'ensemble de l'électronique de balayage séquentiel, cependant, étant donné que pour 1024 lignes par exemple, il suffit désormais de 32 connexions d'accès aux lignes et de 32 transistors de puissance, à chaque extrémité des lignes, il devient concevable de rapporter ces transistors, ainsi que la partie d'électronique de signaux qui les commandent sur le substrat, ce qui permet de réaliser une importante économie dans la fabrication du matériel ainsi qu'une économie de place.

En outre, à partir du moment où il est possible de regrouper l'écran de visualisation à proprement parler et un petit nombre de systèmes de balayage séquentiel ainsi que la partie des signaux vidéo sur un même substrat, le nombre d'accès extérieurs est considérablement réduit et permet de concevoir un écran de visualisation qui est embrochable sur un connecteur pour circuits imprimés tels que ceux qui existent.

C'est ce que représente la figure 8 sur laquelle sont regroupées sous forme de schéma en bloc les diverses composantes d'un écran de visualisation.

Cette figure est intéressante à rapprocher de la figure 1 qui montre le fonctionnement d'un écran de visualisation à cristaux liquides, et elle met en évidence la simplification du circuit.

L'écran de visualisation 1 est commandé selon les colonnes par les signaux vidéo provenant du circuit 6. Il est commandé selon les lignes par un faible nombre de circuits de commande $2_1$ à $2_N$ et $3_1$ à $3_N$, grâce à la commande séquentielle des lignes, laquelle est pilotée par une horloge et un registre à décalage représentés schématiquement en 19.

L'écran de visualisation selon l'invention peut être réalisé en plusieurs parties mécaniques électriquement reliées par des circuits souples: il peut également être réalisé comme cela et représenté sur la figure 8 par des technologies analogues à cells des circuits hybrides sur un seul substrat 15, lequel ne nécessite plus qu'un faible nombre de connexions extérieures et est facilement interchangeable en cas de défaillance du dispositif.

**Revendications**

1. Dispositif de commande d'un écran de visualisation reproduisant des images analysées la forme d'une trame de lignes et de colonnes, cet écran comprenant une couche d'un matériau inscriptible par un effet mixte thermique et électrique, en contact avec des lignes de trame constituées de lignes chauffantes déposées sur un substrat, ce dispositif de commande étant caractérisé en ce que le matériau inscriptible est du type cristaux liquides en phase smectique et que:

— les colonnes sonts inscrites par un signal vidéo en tension,
— les lignes, inscrites séquentiellement au moyen d'un courant, sont comprises, chacune, entre deux dispositifs électroniques de commande répartis en deux groupes de $\sqrt{N}$ dispositifs pour N lignes, ces groupes étant disposés en, d'une part, $\sqrt{N}$ dispositifs reliés à une extrémité de $\sqrt{N}$ groupes de lignes connectées en parallèle, et, d'autre part, $\sqrt{N}$ dispositifs dont chacun est relié à l'autre extrémité d'une seule ligne de chacun des $\sqrt{N}$ groupes de lignes,
— et en ce que chaque ligne est constituée par une résistance chauffante en série avec un élément non linéaire en I/V.

2. Dispositif de commande selon la revendication 1, caractérisé en ce que l'élément non linéaire de chaque ligne de l'écran est une diode.

3. Dispositif de commande selon la revendication 2, caractérisé en ce que, pour chaque ligne, l'élément non linéaire est placé de façon que le potentiel de la ligne soit nul pendant son refroidissement.

4. Ecran de visualisation commandé par le dispositif de la revendication 1, caractérisé en ce que les images sont inscrites, ligne par ligne, par un signal vidéo appliqué sur les colonnes de la trame, à l'issue du chauffage de chaque ligne.

5. Ecran de visualisation selon la revendication 4, caractérisé en ce que les chevauchements des bandes métalliques de liaison entre lignes et dispositifs électroniques de commande, sont isolés par des couches isolantes déposées par sérigraphie, sur le même substrat que l'écran.

6. Ecran de visualisation selon la revendication 5, caractérisé en ce que les dispositifs électroniques de commande de lignes sont rapportés sur le même substrat que l'écran, à côté de celui-ci, par des techniques de circuits hybrides.

**Patentansprüche**

1. Vorrichtung zur Steuerung eines Bildschirms, auf dem Bilder dargestellt werden, die in Form eines Rasters aus Zeilen und Spalten analysiert werden, wobei dieser Bildschirm eine Schicht umfaßt, die aus einem Material besteht, in das durch einen gemischten thermischen und elektrischen Effekt eingeschrieben werden kann, und die in Berührung mit Rasterzeilen ist, die aus auf einem Substrat aufgebrachten Heizleitungen gebildet sind, wobei diese Steuervorrichtung dadurch gekennzeichnet ist, daß das Material, in dem eingeschrieben werden kann, vom Typ Flüssigkristalle in smektischer Phase ist und daß:

— die Spalten durch ein Spannungs-Videosignal eingeschrieben werden,
— die sequentiell durch einen Strom eingeschriebenen Zeilen jeweils zwischen zwei elektronischen Steuervorrichtungen enthalten sind, die in zwei Gruppen von $\sqrt{N}$ Vorrichtungen für N Zeilen eingeteilt sind, wobei diese Gruppen einerseits angeordnet sind in $\sqrt{N}$ Vorrichtungen, die mit einem Ende von $\sqrt{N}$ Gruppen von parallel geschalteten Zeilen verbunden sind, und andererseits angeordnet sind in $\sqrt{N}$ Vorrichtungen, wovon jede mit anderen Ende einer einzigen Zeile jeder der $\sqrt{N}$ Gruppen von Zeilen verbunden ist,
— und daß jede Zeile durch einen Heizwiderstand in Reihe mit einem strom- oder spannungsmäßig nichtlinearen Element gebildet ist.

2. Steuervorrichtung nach Anspruch 1, dadurch gekennzeichnet, daß das nichtlineare Element jeder Zeile des Bildschirms eine Diode ist.

3. Steuervorrichtung nach Anspruch 2, dadurch gekennzeichnet, daß das nichtlineare Element für jede Zeile derart angeordnet ist, daß das Potential der Zeile während ihrer Abkühlung gleich null ist.

4. Bildschirm, der durch die Vorrichtung nach Anspruch 1 gesteuert wird, dadurch gekennzeichnet, daß die Bilder zeilenweise durch eine Videosignal eingeschrieben werden, das an den Spalten des Rasters nach beendigter Erhitzung jeder Zeile angelegt wird.

5. Bildschirm nach Anspruch 4, dadurch gekennzeichnet, daß die Überlappungen der metallischen Verbindungsstreifen zwischen Zeilen und elektronischen Vorrichtungen durch Isolierschichten isoliert sind, die durch Siebdruck auf dem selben Substrat wie der Bildschirm aufgebracht sind.

6. Bildschirm nach Anspruch 5, dadurch gekennzeichnet, daß die elektronischen Zeilen-Steuervorrichtungen auf dem selben Substrat wie der Bildschirm neben diesem durch Hybridschaltungstechnik aufgesetzt sind.

**Claims**

1. Control device for a visualization screen reproducing pictures analyzed in the form of a frame of lines and columns, this screen comprising a layer of a material whereinto inscription can be performed by a mixed thermal and electric effect, and contacting frame lines formed of heating lines deposited onto a substrate, this control device being characterized in that the material whereinto inscription is possible is of the smectic phase liquid crystal type and in that:

— the columns are inscribed by a video voltage signal,
— the lines sequentially inscribed through a current are each comprised between two electronic control devices distributed into two groups of $\sqrt{N}$ devices for N lines, these groups being arranged, on the one hand, in two groups of $\sqrt{N}$ devices connected to one end of $\sqrt{N}$ groups of parallel connected lines and, on the other hand, into $\sqrt{N}$ devices each of which is connected to the other end of a single line of each of the $\sqrt{N}$ groups of lines,
— and in that each line is formed by a heating resistor in series with an element having a non-linear current/voltage behavior.

2. Control device according to claim 1, characterized in that the non-linear element of each line of the screen is a diode.

3. Control device according to claim 2, characterized in that, for each line, the non-linear element is placed in such a manner that the potential of the line is zero during its cooling.

4. Visualization screen controlled by the device of claim 1, characterized in that the pictures are inscribed line by line through a video signal applied to the columns of the frame at the end of the heating of each line.

5. Visualization screen according to claim 4, characterized in that the crossings of the metallic connection strips between lines and electronic control devices are insulated by insulating layers deposited by serigraphy onto the same substrate as the screen.

6. Visualization screen according to claim 5, characterized in that the electronic line control devices are placed onto the same substrate as the screen laterally thereof through hybrid circuit techniques.

# FIG.1

# FIG.2

# FIG.3

# FIG.6

# FIG.4

# FIG.5

# FIG.7

# FIG.8

4